# FASCICULE DE BREVET EUROPEEN

(11) **EP 2 209 981 B1**
(45) Date de publication et mention de la délivrance du brevet: **08.03.2017**
(21) Numéro de dépôt: 08853466.4
(22) Date de dépôt: 06.11.2008
(51) Int. Cl.: F02K 9/97, F02K 9/82, F02K 9/88

(54) **TUYÈRE PROPULSIVE DE DÉTENTE D'UN JET SUPERSONIQUE DE GAZ AVEC UN FLUX SECONDAIRE D'ÉCRAN**
EXPANSIONSSCHUBDÜSE FÜR EINEN ÜBERSCHALLSTRAHLANTRIEB MIT NEBENSTROMUMHÜLLUNG
PROPULSION NOZZLE FOR THE EXPANSION OF A SUPERSONIC GAS JET

(30) Priorité: 06.11.2007 FR 0758812
(43) Date de publication de la demande: 28.07.2010
(73) Titulaire: Centre National d'Etudes Spatiales, 75001 Paris (FR)
(72) Inventeur: BOCCALETTO, Luca, F-91260 Juvisy sur Orge (FR)
(74) Mandataire: Lavoix
(86) Numéro de dépôt international: PCT/FR2008/052004
(87) Numéro de publication internationale: WO 2009/068791

(56) Documents cités:
- FR-A- 2 828 911
- US-A- 3 069 850
- US-A- 3 279 193
- US-A- 3 358 453
- US-A- 3 489 373
- US-A- 4 055 044
- US-A- 5 067 316

## Description

La présente invention concerne une tuyère propulsive de détente d'un jet supersonique de gaz de combustion, comprenant une jupe dans laquelle les gaz de combustion sont détendus avant d'être éjectés vers un milieu ambiant extérieur à la jupe sensiblement suivant l'axe de la tuyère.

Une telle tuyère équipe usuellement les moteurs de fusées opérant dans l'atmosphère, ou bien encore les avions, et de manière générale tout engin qui nécessite une poussée ou une force d'avancement, par détente supersonique de gaz de combustion en milieu ambiant fluide.

Une telle détente supersonique est notamment obtenue grâce à un profil de jupe, le jet de gaz épousant ce profil lors de sa détente dans la jupe.

Le profil de jupe permettant d'obtenir une telle détente est un profil divergent. Usuellement, les jupes sont sensiblement tronconiques, c'est-à-dire qu'elles présentent une forme sensiblement à symétrie de révolution autour d'un axe allant en s'évasant de l'entrée des jupes vers les sorties des jupes.

Sous l'action de phénomènes physiques, la jupe peut être endommagée. On a notamment constaté que le phénomène de décollement du jet supersonique à l'intérieur de la jupe de la tuyère peut entraîner la destruction de cette dernière.

Un tel phénomène se produit si la pression statique de l'écoulement des gaz, en sortie de tuyère, est inférieure à une valeur critique de l'ordre du tiers de la pression du milieu environnant. Dans un tel cas, le jet supersonique de gaz n'est plus capable de suivre correctement le profil interne de la jupe, et on assiste à un phénomène de décollement de jet au voisinage des parois internes de la jupe, à partir de l'extrémité de la jupe.

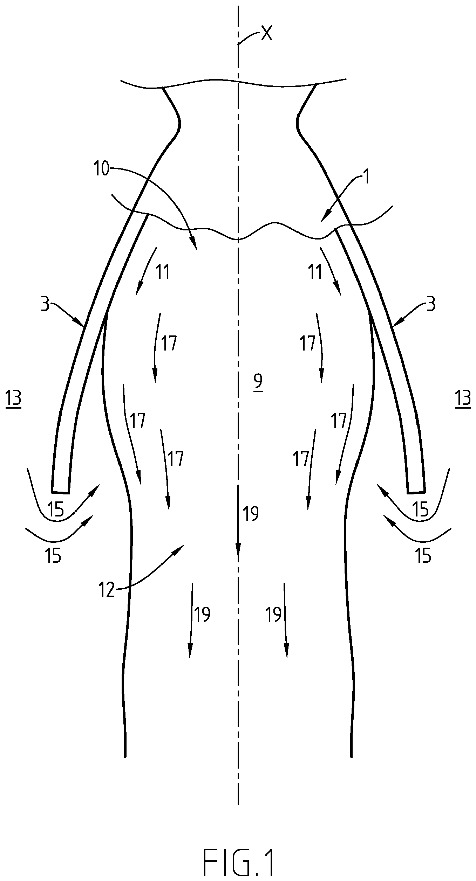

La figure 1, qui est une vue de coupe partielle d'une tuyère 1 en soi classique, montre un tel phénomène de décollement.

La tuyère 1 comporte une jupe 3 de forme sensiblement tronconique.

Au voisinage de l'entrée 10 de la tuyère 1, le jet de gaz 9 introduit dans la tuyère suit partiellement le profil interne de la jupe 3 comme l'illustrent en particulier les flèches 11.

La pression statique de l'écoulement des gaz 9, en sortie 12 de la tuyère 1, étant inférieure au tiers de la pression du milieu environnant 13, ce dernier tend à rentrer dans la tuyère 1. Ce phénomène est illustré par les flèches 15 sur la figure 1.

Sous l'action du milieu ambiant, les couches « frontières » du jet de gaz 9 (c'est-à-dire les couches qui se trouvent à proximité de la paroi interne de la jupe de la tuyère) se décollent de la paroi interne de la jupe 3 et s'orientent, dans un premier temps, vers le centre de la tuyère, comme l'illustrent les flèches 17.

Il en résulte une déflexion des lignes de courant du jet de gaz supersonique.

Dans un second temps, l'orientation des couches frontières du jet de gaz 9 se stabilise et le jet de gaz 9 s'oriente vers une direction sensiblement parallèle à l'axe X de la tuyère 1, comme indiqué par les flèches 19.

Ce décollement du jet de gaz fragilise la partie de la tuyère située entre la zone de la jupe à partir de laquelle le jet de gaz 9 se décolle jusqu'à l'extrémité de la jupe en sortie 12. En effet, le contact entre les couches superficielles du jet de gaz 9 et du milieu ambiant entrant dans la tuyère est à l'origine de charges dynamiques et thermiques suffisamment importantes pour générer une onde de choc, pouvant mener jusqu'à la destruction de la jupe de la tuyère.

On connaît du document US 5 067 316 une tuyère propulsive du type précité, comprenant des moyens pour générer un écoulement secondaire entourant l'écoulement principal généré par la tuyère, de pression 0,3 à 0,8 fois inférieure à la pression atmosphérique. Cet écoulement secondaire permet de diminuer la valeur minimale de la pression statique de l'écoulement principal qui peut être atteinte sans décollement,

Cependant, dans la pratique, cette solution ne permet pas de protéger efficacement la jupe. De plus, une telle tuyère n'est pas adaptée lorsque la pression dans le milieu environnant est supérieure à la pression atmosphérique, comme c'est le cas dans les milieux subaquatiques.

On connaît par ailleurs du document US 3 489 373 un système de propulsion d'un missile, comportant une tuyère centrale, comprenant une jupe.divergente apte à générer un premier écoulement de fluide, et une deuxième tuyère, comprenant une jupe extérieure entourant la première tuyère, apte à créer un deuxième écoulement de fluide. La combinaison de ces deux tuyères a pour but de faire varier la poussée générée par le système, selon que l'une ou l'autre des tuyères, ou les deux tuyères, est/sont utilisée(s). Cependant, ce système ne prévoit nullement de protéger la jupe divergente et la jupe extérieure d'un éventuel décollement.

L'invention permet de pallier ces inconvénients et contribue ainsi à préserver la jupe de la tuyère.

Elle concerne à cet effet une tuyère propulsive de détente d'un jet supersonique de gaz selon la revendication 1.

Ainsi réalisée, la tuyère permet de créer un écran ou barrière au voisinage de son extrémité qui empêche le passage de l'air ambiant vers l'intérieur de la tuyère, ce passage d'air étant à l'origine du décollement du jet supersonique.

En effet, et concrètement, les moyens assurant un écoulement secondaire supersonique, combinés aux moyens annulaires qui collectent le fluide autour de la jupe et aux moyens d'évacuation, génèrent un manchon de fluide à forte quantité de mouvement (autrement dit, le fluide est accéléré) venant entourer l'extrémité de la jupe en faisant barrière au passage du milieu ambiant vers l'intérieur de la tuyère.

Le jet secondaire généré peut être adapté à la pression du milieu ambiant, sans aucune limitation sur la valeur de cette pression, ce qui permet un fonctionnement même en milieu subaquatique, où la pression ambiante est supérieure à la pression atmosphérique.

Avantageusement, on prévoit que les moyens de collecte collectent le fluide suivant un anneau continu autour de la jupe. De cette façon, le manchon généré par la combinaison des moyens de collecte et d'évacuation ne présente aucune ouverture dans laquelle pourrait s'infiltrer le milieu ambiant, ce qui garantit l'efficacité du manchon de fluide à empêcher la pénétration du milieu ambiant dans la jupe de la tuyère.

Suivant des modes de réalisation de la tuyère selon l'invention, cette dernière présente les caractéristiques suivantes, prises séparément ou en combinaison :
- les moyens assurant ledit écoulement supersonique sont constitués au moins partiellement par les moyens d'évacuation et lesdits moyens d'évacuation comprenant des moyens déflecteurs pour diriger le flux collecté dans lesdits moyens de collecte vers l'extrémité libre de ladite jupe ;
- lesdits moyens déflecteurs comportent une paroi périphérique dont l'extrémité libre se termine, suivant l'axe de la tuyère, avant l'extrémité libre de la jupe ;
- ladite paroi est sensiblement concentrique à la paroi de la jupe et présente un profile sensiblement droit ;
- les moyens déflecteurs sont solidaires des moyens de collecte ;
- les moyens d'évacuation comportent des moyens de détente du fluide collecté par lesdits moyens de collecte ;
- les moyens de détente comportent une chambre de détente comprenant une entrée communiquant avec les moyens de collecte et une sortie au voisinage de l'extrémité de ladite jupe, ladite chambre présentant une section dont la largeur est croissante de l'entrée vers la sortie ;
- ladite entrée est une ouverture de passage du fluide des moyens de collecte vers ladite chambre, ladite ouverture de passage présentant une section apte à générer un écoulement supersonique dudit fluide dans ladite chambre ;
- la chambre présente une paroi de détente progressive dudit fluide ;
- ladite paroi de détente présente un profil en cuvette partielle apte à assurer une détente progressive et continue dudit flux de fluide ;
- les moyens de détente sont réalisés solidaires des moyens de collecte ;
- les moyens de collecte collectent le fluide suivant un anneau continu autour de la jupe ;
- les moyens de collecte comportent une goulotte périphérique à la jupe dans laquelle débouche ledit au moins un canal ;
- la goulotte comporte deux parois latérales en saillie par rapport à la paroi de la jupe, entre lesquelles ledit fluide est collecté ;
- les deux dites parois sont venues de matière avec ladite jupe ;
- ledit au moins un canal est ménagé dans la paroi de la jupe ;
- ledit au moins un canal est relié à ladite goulotte par au moins un passage ménagé dans la paroi de ladite jupe ;
- la paroi de la jupe comporte plusieurs canaux longitudinaux uniformément répartis autour de l'axe de la jupe.

L'invention sera davantage comprise à la lumière d'un mode de réalisation qui va maintenant être présenté, en faisant référence aux figures annexées parmi lesquelles :
- la figure 1 est une vue en coupe partielle d'une tuyère selon un état de la technique,
- la figure 2 est une vue en coupe partielle d'une tuyère selon un mode de réalisation de l'invention,
- la figure 3 est un agrandissement d'une zone IV de la tuyère illustrée en figure 3,
- et la figure 4 est une vue de dessous de la tuyère illustrée en figure 1.

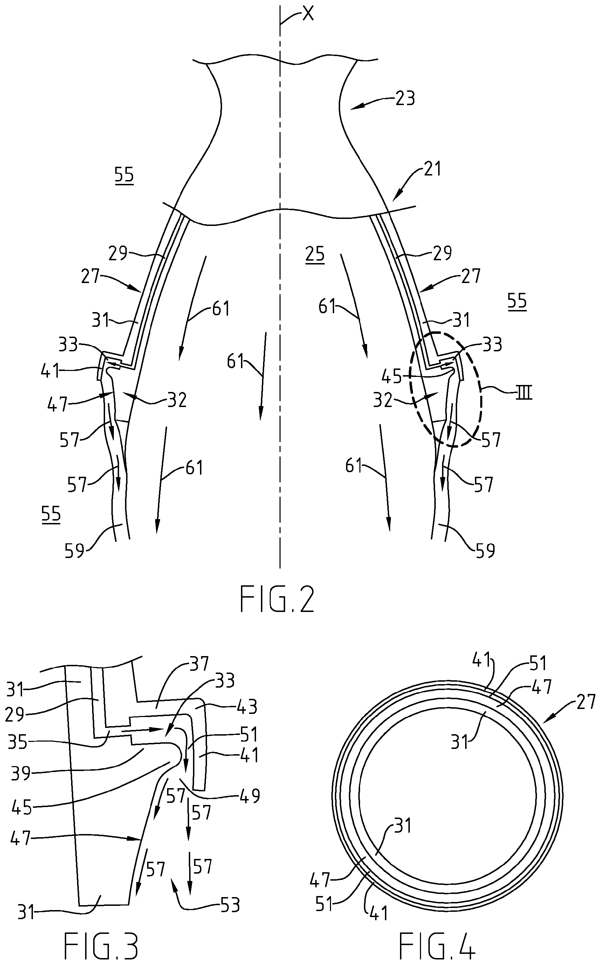

La figure 2 montre une tuyère 21 qui présente une entrée 23 dans laquelle est éjecté un jet de gaz 25.

Les gaz contenus dans le jet 25 sont ceux qui sont éjectés après avoir été brûlés dans une chambre à combustion d'un réacteur qui n'a pas été représenté pour simplifier la lecture des figures.

Dans le cadre du présent exemple où la tuyère est une tuyère pour fusée opérant dans l'atmosphère, le jet de gaz 25 résulte de la combustion d'hydrogène.

La tuyère 21 comporte une jupe 27 dont la forme générale est tronconique.

La jupe 27 de la tuyère 21 comporte des canaux 29 conçus pour y faire circuler un fluide de refroidissement, et ménagés dans l'épaisseur de la paroi 31 de la jupe 27. Les canaux 29 sont réalisés suivant une direction longitudinale, et sont uniformément répartis autour de l'axe de la tuyère 21.

Le fluide de refroidissement est de préférence un gaz. Dans le cadre du présent exemple, ce gaz est l'hydrogène qui sert de carburant pour la fusée. L'hydrogène est ainsi prélevé directement dans les réservoirs.

La jupe 27 présente, au voisinage de son extrémité 32, une goulotte 33 sensiblement annulaire et ménagée à l'extérieur de sa paroi 31, qui a pour fonction de collecter le fluide de refroidissement circulant dans les canaux 29 à travers la paroi 31 de la jupe 27 (voir figure 3).

Pour ce faire, l'intérieur de la goulotte 33 est relié aux canaux 29 par plusieurs passages 35 ménagés dans l'épaisseur de la paroi 31. Chacun des passages 35 relie un canal 29 à la goulotte 33. Les passages 35 ont pour fonction d'amener le fluide circulant dans les canaux 29 jusque dans la goulotte 33 où il est collecté.

Le fluide est injecté dans la goulotte 33 sous une pression au minimum de l'ordre de trois à quatre fois la pression atmosphérique.

La goulotte 33 est réalisée entre une paroi extérieure 37 et une paroi intérieure 39 faisant saillie transversalement par rapport à la surface extérieure de la jupe 27 et venues de matière avec la jupe 27, pour assurer une meilleure résistance de la goulotte 33.

Les deux parois 37 et 39 ainsi formées délimitent un canal annulaire autour de la jupe, ce canal annulaire étant continu.

Le fluide ainsi collecté dans le canal annulaire de la goulotte 33 forme alors un anneau continu autour de la jupe. Il devra être entendu que la section de l'anneau n'est pas forcément circulaire.

La paroi 37 de la goulotte 33 est solidaire de et prolongée par une paroi déflectrice circonférentielle 41 adjacente.

Comme on peut le voir en particulier sur la figure 3, la paroi déflectrice 41 et la paroi 37 de la goulotte sont solidaires par un côté 43, la paroi déflectrice 41 et la paroi 37 formant sensiblement un angle droit.

Plus particulièrement, la paroi déflectrice 41 est réalisée sous la forme d'un élément tubulaire de section circulaire et concentrique par rapport à la jupe 27 extérieurement à celle-ci (voir figure 4).

La paroi déflectrice 41 présente une extrémité libre qui, suivant l'axe X de la tuyère, se termine avant l'extrémité 32 de la jupe 27.

La paroi déflectrice 41 présente un profil sensiblement droit, vue en coupe.

Ainsi, le fluide collecté dans la goulotte 33 est conduit vers l'extérieur de la jupe en étant dirigé suivant une direction qui suit le profil extérieur de la jupe 27.

La paroi 39 de la goulotte 33 s'étend transversalement par rapport à l'axe X de la tuyère et est raccordée à une paroi 47 en forme de demi-cuvette concave par une saillie arrondie 45. Cette paroi concave 47, qui forme la paroi extérieure de la jupe 27, s'étend suivant l'axe X au-delà de l'extrémité libre de la paroi déflectrice 41, jusqu'à l'extrémité 31 de la jupe 27. La paroi annulaire concave 47 est orientée de manière à converger vers l'axe X.

La partie de la paroi concave 47 qui fait face à la paroi déflectrice 41 forme avec celle-ci un canal de sortie divergent formant une chambre 49.

La chambre 49 présente ainsi, d'une part, un étranglement d'entrée 51 délimité entre la saillie arrondie 45 de la paroi 39 et la paroi déflectrice 41, et d'autre part, une sortie 53 débouchant dans le milieu ambiant, au voisinage de l'extrémité de la jupe.

L'étranglement 51 présente une section de dimensions telles qu'il est apte à générer un écoulement supersonique dans la chambre 49, c'est-à-dire un écoulement dont la vitesse est supérieure à la vitesse du son local.

Pour générer un tel écoulement, les dimensions de l'étranglement 51 doivent être suffisamment petites pour que le flux de fluide collecté, maintenu sous une pression d'au minimum deux fois la pression atmosphérique, atteigne une vitesse au moins égale à MACH 1 en pénétrant dans la chambre.

L'écoulement supersonique du flux secondaire s'adapte à la pression du milieu ambiant une fois qu'il a atteint l'extrémité libre de la paroi déflectrice 41, tout en gardant une quantité de mouvement (haute vitesse) qui permet au flux secondaire d'agir comme une barrière principale entre le jet de gaz 25 et le milieu ambiant, quelle que soit sa pression.

La forme concave de la paroi 47 assure à la chambre 49 une section divergente dont la largeur est croissante de l'entrée 51 à la sortie 53.

La forme de la chambre 49 s'ouvrant ainsi sur le milieu ambiant 55 permet une détente supersonique du flux de fluide de refroidissement.

La forme concave de la paroi 47 assure la détente progressive du flux de fluide de refroidissement, comme illustré par les flèches 57 sur la figure 3.

Le flux de fluide de refroidissement suit ainsi une direction sensiblement parallèle à celle de l'axe de la tuyère.

Comme l'illustre la figure 2, la tuyère selon l'invention permet non seulement la détente du jet de gaz principal 25, mais également la détente du flux de fluide constituant un flux secondaire 59 qui vient entourer la jupe 27.

Le flux secondaire 59 est éjecté dans le milieu ambiant en formant un manchon à forte quantité de mouvement de protection faisant écran entre le milieu ambiant et le jet de gaz 25.

Grâce à la collecte et à l'évacuation continues, c'est-à-dire sans obstacle d'aucune sorte autour de la jupe, le manchon formant écran ne présente aucune faille ou ouverture à travers laquelle le milieu ambiant peut pénétrer.

Le flux de gaz 25 peut ainsi librement suivre le profil de la jupe 27 de la tuyère.

En empêchant ainsi le décollement de jet de gaz 25 de la paroi interne de la jupe 27, les performances de la tuyère sont améliorées grâce au fait que le jet suit de façon optimale le profil interne de la jupe 27 et la jupe se trouve protégée.

On comprend clairement de la description qui précède comment la combinaison des moyens de collecte et des moyens d'évacuation permettent d'empêcher l'infiltration du milieu ambiant dans la tuyère.

Il devra toutefois être entendu que l'invention n'est pas limitée au mode de réalisation qui est décrit et représenté.

Notamment, le fluide amené dans la goulotte pourrait ne pas être un fluide de refroidissement. Par exemple, il pourrait être un fluide amené par un conduit extérieur à la jupe qui ne contribuerait pas au refroidissement de cette dernière.

De plus, le fluide amené dans la goulotte pourrait être un autre fluide que l'hydrogène et pourrait également être différent du fluide servant de carburant à l'engin équipé d'une tuyère selon l'invention.

Par ailleurs, la goulotte de collecte réalisée à part de la jupe et pourrait être rapportée sur la jupe.

Enfin, la paroi déflectrice 41 pourrait présenter une forme différente. Elle pourrait notamment présenté un galbe, c'est-à-dire une forme sensiblement concave qui suivrait le profil de la paroi 47 en forme de demi cuvette.

## Revendications

1. Tuyère propulsive (21) de détente d'un jet supersonique de gaz (25), comprenant une jupe (27) divergente dans laquelle les gaz de combustion (25) sont détendus avant d'être éjectés vers un milieu ambiant (55) extérieur à ladite jupe (27) sensiblement suivant l'axe (X) de la tuyère (21), la jupe (27) comportant :
- au moins un canal (29) d'amené d'un fluide au voisinage de son extrémité libre (32),
- des moyens (33, 37, 39) de collecte annulaire dudit fluide autour de ladite jupe (27), ledit au moins un canal (29) débouchant dans lesdits moyens de collecte,
- et des moyens (51, 41, 47, 49) d'évacuation dudit fluide collecté sous forme d'un écoulement secondaire accéléré suivant une direction (57) qui suit sensiblement l'axe (X) de la tuyère (21),
**caractérisée en ce que** la tuyère comporte des moyens assurant un écoulement supersonique dudit écoulement secondaire, aptes à générer un manchon de fluide faisant barrière au passage du milieu ambiant (55) vers l'intérieur de la jupe (27), **en ce que** les moyens assurant ledit écoulement supersonique sont constitués au moins partiellement par les moyens d'évacuation, lesdits moyens d'évacuation comprenant des moyens déflecteurs (41) pour diriger le flux collecté dans lesdits moyens de collecte (33) vers l'extrémité libre (32) de ladite jupe (27), et **en ce que** lesdits moyens déflecteurs comportent une paroi périphérique (41) dont l'extrémité libre se termine, suivant l'axe de la tuyère, avant l'extrémité libre (31) de la jupe (27).

2. Tuyère selon la revendication 1, **caractérisée en ce que** ladite paroi (41) est sensiblement concentrique à la paroi (31) de la jupe (27) et présente un profile sensiblement droit.

3. Tuyère selon la revendication 1 ou 2, **caractérisée en ce que** les moyens déflecteurs (41) sont solidaires des moyens de collecte (37).

4. Tuyère selon l'une quelconque des revendications précédentes, **caractérisée en ce que** les moyens d'évacuation comportent des moyens de détente (47, 49) du fluide collecté par lesdits moyens de collecte (33, 37, 39).

5. Tuyère selon la revendication 4, **caractérisée en ce que** les moyens de détente comportent une chambre de détente (49) comprenant une entrée (51) communiquant avec les moyens de collecte (33) et une sortie (53) au voisinage de l'extrémité (32) de ladite jupe (27), ladite chambre (49) présentant une section dont la largeur est croissante de l'entrée (51) vers la sortie (53).

6. Tuyère selon la revendication 5, **caractérisée en ce que** ladite entrée (51) est une ouverture de passage du fluide des moyens de collecte (33) vers ladite chambre (49), ladite ouverture de passage présentant une section apte à générer un écoulement supersonique dudit fluide dans ladite chambre (49).

7. Tuyère selon la revendication 5 ou 6, **caractérisée en ce que** la chambre (49) présente une paroi (47) de détente progressive dudit fluide.

8. Tuyère selon la revendication 7, **caractérisée en ce que** ladite paroi de détente (47) présente un profil en cuvette partielle apte à assurer une détente progressive et continue dudit flux de fluide.

9. Tuyère selon l'une quelconque des revendications 4 à 8, **caractérisée en ce que** les moyens de détente (47) sont réalisés solidaires des moyens de collecte (39).

10. Tuyère selon l'une quelconque des revendications précédentes, **caractérisée en ce que** les moyens de collecte (33, 37, 39) collectent le fluide suivant un anneau continu autour de la jupe (27).

11. Tuyère selon l'une quelconque des revendications précédentes, **caractérisée en ce que** les moyens de collecte comportent une goulotte (33) périphérique à la jupe (27) dans laquelle débouche ledit au moins un canal (29).

12. Tuyère selon la revendication 11, **caractérisée en ce que** la goulotte comporte deux parois latérales (37, 39) en saillie par rapport à la paroi extérieure (31) de la jupe (27), entre lesquelles ledit fluide est collecté.

13. Tuyère selon la revendication 12, **caractérisée en ce que** les deux dites parois (37, 39) sont venues de matière avec ladite jupe (27).

14. Tuyère selon l'une quelconque des revendications précédentes, **caractérisée en ce que** ledit au moins un canal est ménagé dans la paroi de la jupe.

15. Tuyère selon la revendication 14 combinée à l'une quelconque des revendications 11 à 13, **caractérisée en ce que** ledit au moins un canal (29) est relié à ladite goulotte par au moins un passage (35) ménagé dans la paroi (31) de ladite jupe (27).

16. Tuyère selon l'une quelconque des revendications précédentes, **caractérisée en ce que** la paroi de la jupe comporte plusieurs canaux longitudinaux (29) uniformément répartis autour de l'axe de la jupe.

## Patentansprüche

1. Treibdüse (21) für die Expansion eines Überschallgasstrahls (25), umfassend eine auseinanderlaufende Verkleidung (27), in der Verbrennungsgase (25) entspannt werden, bevor sie in ein die Verkleidung (27) umgebendes Medium (55) im Wesentlichen gemäß der Achse (X) der Düse (21) ausgestoßen werden, wobei die Verkleidung (27) umfasst:
- mindestens einen Kanal (29) für die Zufuhr eines Fluids in der Nähe seines freien Endes (32),
- Mittel (33, 37, 39) zum ringförmigen Sammeln des Fluids um die Verkleidung (27) herum, wobei mindestens ein Kanal (29) in diese Sammelmittel mündet,
- und Mittel (51, 41, 47, 49) für den Austritt des gesammelten Fluids in Form einer Sekundärströmung, die in eine Richtung (57) beschleunigt wird, die im Wesentlichen der Achse (X) der Düse (21) folgt,
**dadurch gekennzeichnet, dass** die Düse Mittel aufweist, die eine Überschallströmung der Sekundärströmung sicherstellen, und geeignet sind, eine Gashülse zu erzeugen, die eine Sperre für einen Durchlass des umgebenden Mediums (55) in das Innere der Verkleidung (27) darstellt, dass die die Überschallströmung sichernden Mittel zumindest teilweise durch die Austrittsmittel gebildet werden, wobei die Austrittsmittel Ablenkmittel (41) umfassen, um den in den Sammelmitteln (33) gesammelten Zustrom zum freien Ende (32) der Verkleidung (27) zu richten, und dass die Ablenkmittel (41) eine Umfangswand aufweisen, deren freies Ende gemäß der Achse der Düse vor dem freien Ende (31) der Verkleidung (27) endet.

2. Düse nach Anspruch 1, **dadurch gekennzeichnet, dass** die Wand (41) im Wesentlichen konzentrisch zu der Wand (31) der Verkleidung (27) ist und eine im Wesentlichen gerade Kontur aufweist.

3. Düse nach Anspruch 1 oder 2, **dadurch gekennzeichnet, dass** die Ablenkmittel (41) mit den Sammelmitteln (37) verbunden sind.

4. Düse nach einem beliebigen der vorhergehenden Ansprüche, **dadurch gekennzeichnet, dass** die Austrittsmittel Mittel (47, 49) zur Expansion des von den Sammelmitteln (33, 37, 39) gesammelten Fluids aufweisen.

5. Düse nach Anspruch 4, **dadurch gekennzeichnet, dass** die Expansionsmittel eine Expansionskammer (49) aufweisen, die einen mit den Sammelmitteln (33) in Verbindung stehenden Eingang (51) und einen Ausgang (53) in der Nähe des Endes (32) der Verkleidung (27) umfasst, wobei die Kammer (49) einen Querschnitt aufweist, dessen Breite vom Eingang (51) zum Ausgang (53) steigend ist.

6. Düse nach Anspruch 5, **dadurch gekennzeichnet, dass** der Eingang (51) eine Öffnung für den Durchlass des Fluids der Sammelmittel (33) zu der Kammer (49) ist, wobei die Durchlassöffnung einen Querschnitt aufweist, der geeignet ist, eine Überschallströmung des Fluids in die Kammer (49) zu erzeugen.

7. Düse nach Anspruch 5 oder 6, **dadurch gekennzeichnet, dass** die Kammer (49) eine Wand (47) zur fortschreitenden Expansion des Fluids aufweist.

8. Düse nach Anspruch 7, **dadurch gekennzeichnet, dass** die Expansionswand (47) eine teilschalenförmige Kontur aufweist, die geeignet ist, eine fortschreitende und kontinuierliche Expansion des Fluidstroms sicherzustellen.

9. Düse nach einem beliebigen der Ansprüche 4 bis 8, **dadurch gekennzeichnet, dass** die Expansionsmittel (47) einstückig mit den Sammelmitteln (39) hergestellt sind.

10. Düse nach einem beliebigen der vorhergehenden Ansprüche, **dadurch gekennzeichnet, dass** die Sammelmittel (33, 37, 39) das Fluid gemäß einem durchgehenden Ring um die Verkleidung (27) herum sammeln.

11. Düse nach einem beliebigen der vorhergehenden Ansprüche, **dadurch gekennzeichnet, dass** die Sammelmittel eine zu der Verkleidung (27) umfängliche Ablaufrinne (33) aufweisen, in die der mindestens eine Kanal (29) mündet.

12. Düse nach Anspruch 11, **dadurch gekennzeichnet, dass** die Ablaufrinne zwei in Bezug auf die Außenwand (31) der Verkleidung (27) hervorspringende Seitenwände (37, 39) aufweist, zwischen denen das Fluid gesammelt wird.

13. Düse nach Anspruch 12, **dadurch gekennzeichnet, dass** die zwei genannten Wände (37, 39) einstückig mit der Verkleidung (27) hergestellt sind.

14. Düse nach einem beliebigen der vorhergehenden Ansprüche, **dadurch gekennzeichnet, dass** der mindestens eine Kanal in der Wand der Verkleidung eingearbeitet ist.

15. Düse nach Anspruch 14, kombiniert mit einem beliebigen der Ansprüche 11 bis 13, **dadurch gekennzeichnet, dass** der mindestens eine Kanal (29) mit der Ablaufrinne durch mindestens einen Durchlass (35), der in der Wand (31) der Verkleidung (27) eingearbeitet ist, verbunden ist.

16. Düse nach einem beliebigen der vorhergehenden Ansprüche, **dadurch gekennzeichnet, dass** die Wand der Verkleidung mehrere Längskanäle (29) aufweist, die gleichmäßig um die Achse der Verkleidung herum verteilt sind.

## Claims

1. Propulsion nozzle (21) for the expansion of a supersonic gas jet (25), comprising a diverging skirt (27) in which the combustion gases (25) are expanded before being ejected towards a surrounding medium (55) outside said skirt (27) substantially along the axis (X) of the nozzle (21), the skirt (27) having:
- at least one channel (29) for conveying a fluid in the vicinity of its free end (32),
- means (33, 37, 39) for annular collection of said fluid around said skirt (27), said at least one channel (29) opening into said collecting means,
- and means (51, 41, 47, 49) for discharging said collected fluid in the form of an accelerated secondary flow along a direction (57) which substantially follows the axis (X) of the nozzle (21),
**characterised in that** the nozzle has means which ensure a supersonic flow of said secondary flow, which means are capable of generating a jacket of fluid which forms a barrier to the passage of the surrounding medium (55) towards the inside of the skirt (27), **in that** the means which ensure said supersonic flow are composed at least in part by the discharge means, said discharge means comprising deflecting means (41) for directing the stream collected in said collecting means (33) towards the free end (32) of said skirt (27), and **in that** said deflecting means have a peripheral wall (41), the free end of which terminates, along the axis of the nozzle, before the free end (31) of the skirt (27).

2. Nozzle according to claim 1, **characterised in that** said wall (41) is substantially concentric with the wall (31) of the skirt (27) and has a substantially straight profile.

3. Nozzle according to claim 1 or 2, **characterised in that** the deflecting means (41) are integral with the collecting means (37).

4. Nozzle according to any one of the preceding claims, **characterised in that** the discharge means have means (47, 49) for expansion of the fluid collected by said collecting means (33, 37, 39).

5. Nozzle according to claim 4, **characterised in that** the expansion means have an expansion chamber (49) comprising an inlet (51) which communicates with the collecting means (33) and an outlet (53) in the vicinity of the end (32) of said skirt (27), said chamber (49) having a cross-section whose width increases from the inlet (51) to the outlet (53).

6. Nozzle according to claim 5, **characterised in that** said inlet (51) is a passage opening for the fluid from the collecting means (33) to said chamber (49), said passage opening having a cross-section capable of generating a supersonic flow of said fluid in said chamber (49).

7. Nozzle according to claim 5 or 6, **characterised in that** the chamber (49) has a wall (47) for gradual expansion of said fluid.

8. Nozzle according to claim 7, **characterised in that** said expansion wall (47) has a profile which is dish-shaped in part, capable of ensuring gradual and continuous expansion of said stream of fluid.

9. Nozzle according to any one of claims 4 to 8, **characterised in that** the expansion means (47) are integral with the collecting means (39).

10. Nozzle according to any one of the preceding claims, **characterised in that** the collecting means (33, 37, 39) collect the fluid in a continuous ring around the skirt (27).

11. Nozzle according to any one of the preceding claims, **characterised in that** the collecting means have a chute (33) peripheral to the skirt (27), into which said at least one channel (29) opens.

12. Nozzle according to claim 11, **characterised in that** the chute has two side walls (37, 39) which project relative to the outside wall (31) of the skirt (27) and between which said fluid is collected.

13. Nozzle according to claim 12, **characterised in that** said two walls (37, 39) are formed in one piece with said skirt (27).

14. Nozzle according to any one of the preceding claims, **characterised in that** said at least one channel is formed in the wall of the skirt.

15. Nozzle according to claim 14 in combination with any one of claims 11 to 13, **characterised in that** said at least one channel (29) is connected to said chute by at least one passage (35) formed in the wall (31) of said skirt (27).

16. Nozzle according to any one of the preceding claims, **characterised in that** the wall of the skirt has a plurality of longitudinal channels (29) distributed uniformly about the axis of the skirt.
